Europäisches Patentamt

European Patent Office

Office européen des brevets

(19)

(11) Numéro de publication: **0 148 803**
**B1**

(12) **FASCICULE DE BREVET EUROPEEN**

(45) Date de publication du fascicule du brevet:
**01.03.89**

(51) Int. Cl.⁴: **G 02 F 1/11**, G 02 F 1/33

(21) Numéro de dépôt: **85400034.6**

(22) Date de dépôt: **09.01.85**

(54) **Déflecteur acousto-optique polychromatique.**

(30) Priorité: **10.01.84 FR 8400257**

(43) Date de publication de la demande:
**17.07.85 Bulletin 85/29**

(45) Mention de la délivrance du brevet:
**01.03.89 Bulletin 89/9**

(84) Etats contractants désignés:
**DE FR GB IT NL**

(56) Documents cités:
EP-A- 0 018 150
DE-A- 3 205 868
DE-A- 3 248 539
US-A- 3 783 185

JOURNAL OF PHYSICS E; SCIENTIFIC INSTRUMENTS,
vol. 6, no. 9, septembre 1973, pages 868-670, Londres,
GB; Y. OHTSUKA: "Sound velocity measurement based
on optical heterodyne detection techniques using two
successive ultrasonic waves"
APPLIED OPTICS, vol. 20, no. 4, 15 février 1981, pages
588-590, New York, US; J.B. ABBISS et al.:
"Deviation-free Bragg cell frequency-shifting"

(73) Titulaire: **SOCIETE FRANCAISE D'EQUIPEMENTS POUR
LA NAVIGATION AERIENNE (S.F.E.N.A.),**
**B.P. 59 Aérodrome de Villacoublay, F-78140 Velizy
Villacoublay (FR)**
Titulaire: **Société AUTOMATES ET AUTOMATISMES
(S.A.R.L.), 4 Chemin des Buttes, F-91190 Gif sur Yvette
(FR)**

(72) Inventeur: **Bastian, Jean-Louis, 7, Avenue du Général
Maistre, F-75014 Paris (FR)**
Inventeur: **Picault, Jean-Pierre, 2, Ch. de la Garenne,
F-91290 La Norville (FR)**

(74) Mandataire: **Chevallier, Robert Marie Georges, Cabinet
BOETTCHER 23, rue La Boétie, F-75008 Paris (FR)**

## Description

L'invention a pour objet un déflecteur acousto-optique polychromatique.

Un déflecteur appelé parfois modulateur est un dispositif qui permet, à l'aide de moyens acousto-optiques de dévier de sa trajectoire avec, éventuellement en plus, une modulation en puissance, un faisceau lumineux se propageant sur un chemin optique déterminé. Généralement ces moyens acousto-optiques sont constitués par des cristaux taillés, par exemple, en paratéllurite, sur lesquels sont appliquées des électrodes d'une source d'ultrasons apte à émettre des signaux à fréquence déterminée ou déterminable.

Un tel déflecteur donne de bons résultats quand il s'agit de dévier un rayon monochromatique ou à une seule fréquence. Par contre, quand un faisceau lumineux a plusieurs fréquences, un tel déflecteur donne naissance à sa sortie, à autant de rayons divergents qu'il existe de longueurs d'ondes différentes composant le faisceau incident. Ces rayons se propagent alors sur des chemins optiques différents qui sont divergents généralement à partir d'un point optique source situé dans le déflecteur. Cet état de la technique est illustré par le document EP-A-0 018 150. Pour éliminer cet inconvénient, d'autres dispositifs ont été imaginés. Ils peuvent être constitués, par exemple, de lames dichroïques séparant les différentes longueurs d'ondes sur des chemins optiques respectifs différents. Puis des déflecteurs particuliers, associés à chaque rayon distinct, traitent séparément ces rayons pour ensuite les combiner à nouveau au moyen de lames semi-transparentes, semi-réfléchissantes.

Il est incontestable que la solution décrite ci-dessus n'est pas particulièrement simple; elle présente même des inconvénients importants, comme par exemple la complexité et l'encombrement des systèmes optiques, de plus elle nécessite une très grande précision dans la réalisation des pièces mécaniques qui supportent ces systèmes optiques. Enfin, d'une part, la stabilité aux chocs et aux vibrations n'est pas très bonne, et d'autre part, on observe des pertes importantes de l'énergie optique en transmission et en réflexion.

La présente invention a pour but principal de réaliser un déflecteur acousto-optique permettant d'obtenir, à partir d'un faisceau composé, la déviation d'au moins deux rayons lumineux de longueurs d'onde différentes, ce déflecteur étant d'une part de conception compacte et de réalisation simple et peu onéreuse et permettant d'autre part, d'obtenir la déviation des rayons de longueurs d'ondes différentes sur des trajets optiques voisins mais parallèles et distincts.

Le document US-A-3 783 185 décrit un déflecteur acousto-optique comprenant un cristal à travers lequel est envoyé un faisceau optique multicolore et sur une face latérale duquel est placé un transducteur qui transforme en ondes acoustiques des signaux électriques provenant de plusieurs générateurs de signaux travaillant à des fréquences différentes. L'effet des ondes acoustiques est de produire à la sortie du cristal de nombreux rayons diffractés dont l'angle de diffraction est fonction de la fréquence de ces ondes acoustiques. Mais ces rayons diffractés sont divergents dans des directions différentes à partir du point de rencontre, à l'intérieur du cristal, du faisceau optique et des ondes acoustiques.

Le but principal de la présente invention est atteint par le fait que le matériau acousto-optique est composé d'au moins un cristal en paratéllurite à taille off axis, que les moyens pour engendrer des ondes ultrasonores comportent des sources d'ultrasons à fréquences différentes comprenant des transducteurs associés au matériau acousto-optique et disposés en nombre égal au nombre de rayons émergents parallèles désirés, en des points du matériau acousto-optique espacés dans la direction du faisceau, ces transducteurs engendrant des ondes ultrasonores à fréquences de valeur croissante aux différents points dans la direction du faisceau, et par le fait que le déflecteur comprend en outre, en avant du matériau acousto-optique sur la trajectoire du faisceau à traiter, un polariseur ayant une direction de polarisation de ce faisceau parallèle à la direction de propagation desdites ondes ultrasonores à l'intérieur du matériau acousto-optique.

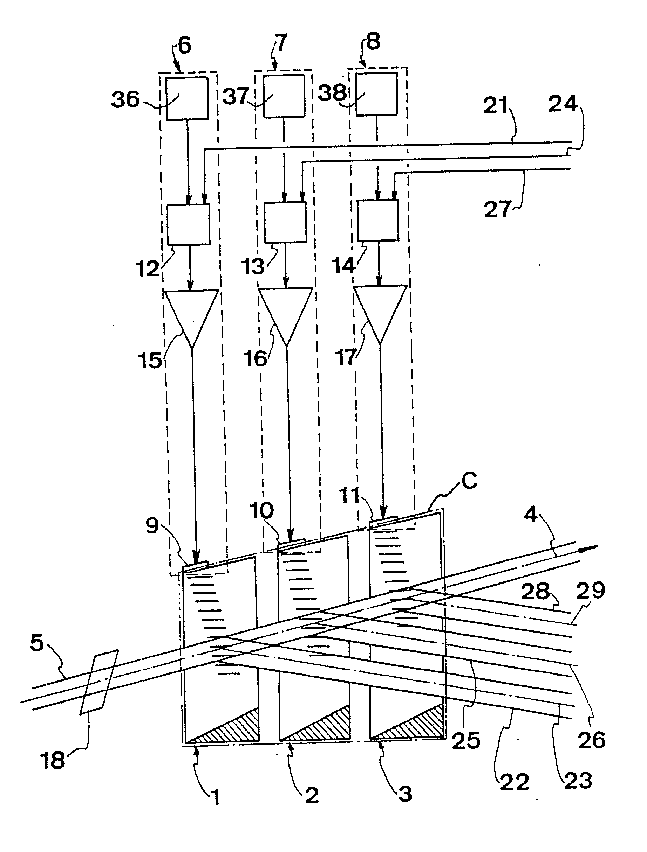

D'autres caractéristiques et avantages de l'invention apparaîtront au cours de la description que l'on donnera maintenant, sans intention limitative d'un déflecteur optique, particulièrement adapté à un faisceau polychromatique à trois longueurs d'ondes, comme par exemple, le rouge, le vert, le bleu. On se reportera à la figure unique annexée qui représente schématiquement ce déflecteur.

Ce schéma sert simultanément à montrer un premier mode de réalisation dans lequel plusieurs cristaux distincts 1, 2, 3, en paratéllurite (dessinés en trait plein) à taille off axis sont utilisés en parallèle, ainsi qu'un mode préféré de réalisation dans lequel un seul cristal C (dessiné en trait mixte) est utilisé en remplacement des trois cristaux 1, 2, 3, rien n'étant changé par ailleurs dans le déflecteur, ce cristal unique C étant aussi à taille off axis.

Le nombre de trois n'est qu'un exemple particulier; il correspond à trois couleurs fondamentales qui permettent de visualiser en couleur un faisceau laser à plusieurs longueurs d'ondes.

Quand on n'utilise pas un unique cristal C, les trois cristaux 1, 2, 3, sont disposés successivement les uns derrières les autres, sur l'axe optique 4 d'un faisceau incident 5 composé de trois longueurs d'ondes correspondant par exemple, au rouge, au vert, et au bleu. Au cristal C ou à chacun des cristaux 1, 2, 3, sont associées des sources d'ultra-sons, respectivement 6, 7, 8 comprenant des émetteurs de signaux de radiofréquences électriques 36, 37, 38. La connexion avec les cristaux a lieu à l'aide d'ensembles d'électrodes ou plus précisément de transducteurs piézo-électriques représentés schématiquement, 9, 10 et 11. Les modalités d'application de ces électrodes sont connues en soi et ne présentent pas de difficulté. Avantageusement, après la sortie respectivement des sources de radiofréquences 6, 7 et 8 peuvent être disposés des modulateurs 12, 13, 14 suivis éventuellement d'amplificateurs 15, 16, et 17. Les deux entrées des modulateurs 12, 13 et 14 sont reliées respectivement d'une part, à la source d'ultra-sons correspondante et d'autre part, par une entrée de commande, à des moyens aptes à fournir des ordres de commande sous forme de signaux de modulation.

Avant de rencontrer le cristal C ou les cristaux 1, 2, 3, le faisceau incident 5 rencontre un polariseur 18, comprenant par exemple, une lame de BREWSTER où il est polarisé dans une direction donnée.

Les moyens d'introduction des ultra-sons à l'intérieur du cristal C ou des cristaux 1, 2, 3, sont disposés de façon que la direction de propagation de ces ondes ultrasonores, dans les cristaux, soit parallèle à la direction de la polarisation du faisceau 5 réalisée dans le polariseur 18 au moyen de la lame de BREWSTER. Il existe une fréquence minimale d'action des ondes ultrasonores sur un faisceau optique en dessous de laquelle il ne se produit aucun effet sur ce faisceau optique. Dans ce cas les trois transducteurs 9, 10, 11 sont disposés successivement de façon que la fréquence minimale d'action croisse en suivant la direction de propagation du faisceau lumineux 5 le long de l'axe optique 4.

Dans cet exemple, pour obtenir les déviations successives de trois faisceaux rouge, vert et bleu, le premier transducteur 9 est associé à la couleur rouge qui a sa longueur d'onde la plus longue et donc la fréquence d'action la plus faible. En second est disposé le transducteur 10 ayant une action pour le vert, dont la fréquence est supérieure à celle du rouge et de même pour le transducteur 11 correspondant au bleu dont la fréquence est plus élevée que celles du rouge et du vert.

Le déflecteur acousto-optique décrit servant à la déviation et à la modulation des trois couleurs fondamentales rouge, vert et bleu fonctionne de la façon suivante – le faisceau incident 5 se propage polarisé, comme dit précédemment le long de l'axe optique 4 et traverse le cristal C ou le cristal 1, en étant soumis en premier à la fréquence d'action pour le rouge. Si un signal est envoyé sur la ligne d'entrée 21 pour commander l'ouverture du modulateur 12, les ultra-sons se propagent à l'intérieur du cristal et agissent uniquement sur la longueur d'onde du rouge pour donner naissance à un rayon émergent 22 rouge qui est dévié de sa trajectoire initiale, c'est-à-dire de l'axe optique 4. Ce faisceau 22 peut traverser le reste du cristal C ou les deux autres cristaux parce que sa direction de polarisation a subi alors une rotation de 90°; avec une telle direction de propagation, ce rayon 22 peut se propager sans être dévié à nouveau et donc se déplacer le long d'un axe 23. Si éventuellement, on désire obtenir une déviation et/ou une modulation de la couleur suivante, en l'occurrence le vert, on commande par la deuxième ligne vidéo 24 le fonctionnement du modulateur 13 qui permet alors une application des ondes ultrasonores par le deuxième transducteur 10 correspondant à la couleur verte. Ce rayon vert a voyagé dans le cristal, sans être dévié par le premier transducteur 9 puisque sa fréquence minimale est inférieure à celle du vert: il subit alors une déviation pour donner naissance à un rayon émergent 25 vert, se déplaçant le long d'un axe de propagation 26. Il en est de même pour un rayon bleu obtenu par une commande envoyée par la ligne 27 au modulateur 14 et au transducteur 11. Ce rayon bleu dévié 28 se propage le long d'un axe 29.

L'expérience montre qu'en utilisant un faisceau lumineux émis par une source laser, polarisé convenablement, les trois directions de propagation 23, 26 et 29 des faisceaux émergents déviés sont très proches les unes des autres et peuvent être parallèles. De ce fait on peut, en commandant sélectivement les trois lignes de commande 21, 24 et 27, obtenir au choix la naissance des rayons déviés rouge, vert ou bleu séparément ou simultanément. De plus, comme ces faisceaux sont très proches des uns des autres, il est très facile de les combiner de diverses manières pour obtenir une source à coloration variable.

L'exemple qui a été décrit ci-dessus est celui d'un faisceau polychromatique à trois couleurs, mais il est bien évident qu'il s'applique aussi bien et sans difficulté pour l'homme de l'art, à un faisceau composé de deux longueurs d'ondes différentes ou d'une pluralité de longueur d'ondes. Le déflecteur de l'invention ne comporte que peu d'éléments; il est essentiellement constitué par un type de cristal bien connu; il a un minimum de perte de puissance par transmission et permet d'obtenir, très facilement, des rayons colorés distincts à partir d'un faisceau polychromatique comme expliqué ci-dessus, sans difficulté de mise en œuvre.

Dans le cas de l'emploi d'un seul cristal C, les transducteurs 9, 10, 11 sont disposés en des points successifs espacés dans la direction de l'axe optique 4 du faisceau 5 à traiter; quand on emploie plusieurs cristaux successifs 1, 2, 3 à chacun d'eux est affecté un transducteur 9, 10, 11 de sorte que ces transducteurs sont encore disposés en des points successifs espacés dans la direction du faisceau 5.

## Revendications

1. Déflecteur acousto-optique pour séparer d'un faisceau optique (5) composé de plusieurs rayons à longueurs d'onde différentes au moins deux rayons émergents parallèles et distincts, comprenant un matériau acousto-optique et des moyens pour engendrer des ondes ultrasonores à fréquences différentes adaptées aux longueurs d'onde du faisceau optique, caractérisé en ce que le matériau acousto-optique est composé d'au moins un cristal (C) en paratéllurite à taille off axis, en ce que les moyens pour engendrer des ondes ultrasonores comportent des sources d'ultrasons à fréquences différentes (6, 7, 8) comprenant des transducteurs (9, 10, 11) associés au matériau acousto-optique et disposés en nombre égal au nombre de rayons émergents parallèles désirés (22, 25, 28) en des points du matériau acousto-optique espacés dans la direction du faisceau (5), ces transducteurs engendrant des ondes ultrasonores à fréquences de valeur croissante aux différents points dans la direction du faisceau (5), et en ce que le déflecteur comprend en outre, en avant du matériau acousto-optique sur la trajectoire du faisceau (5) à traiter, un polariseur (18) ayant une direction de polarisation de ce faisceau (5) parallèle à la direction de propagation desdites ondes ultrasonores à l'intérieur du matériau acousto-optique.

2. Déflecteur selon la revendication 1, caractérisé en ce que les sources d'ultrasons (6, 7, 8) comprennent des émetteurs de signaux à radiofréquences (36, 37, 38) qui sont reliés respectivement à des modulateurs (12, 13, 14) à ligne de commande (21, 24, 27), les sorties de ces modulateurs (12, 13, 14) étant reliées respectivement aux transducteurs (9, 10, 11).

3. Déflecteur selon la revendication 1, caractérisé en ce qu'il comprend trois transducteurs (9, 10, 11) ayant respectivement des fréquences d'action aptes à dévier du faisceau (5) successivement un rayon rouge, un rayon vert, un rayon bleu.

4. Déflecteur selon la revendication 1, caractérisé en ce qu'il comprend plusieurs cristaux successifs parallèles (1, 2, 3) associés chacun respectivement à un transducteur correspondant (9, 10, 11), en nombre égal au nombre de rayons émergents (22, 25, 28) déviés du faisceau (5) à traiter.

## Claims

1. An acousto-optical deflector for separating from an optical beam (5) composed of a plurality of rays of different wavelengths, at least two separate parallel emergent rays, comprising an acousto-optical material and means for generating ultrasonic waves at different frequencies adapted to the wavelengths of the optical beam, characterised in that the acousto-optical material is composed of at least one crystal (C) of paratellurite of off-axis cut, that the means for generating the ultrasonic waves comprise sources of ultrasounds at different frequencies (6, 7, 8) comprising transducers (9, 10, 11) associated with the acousto-optical material and disposed in a number which is equal to the number of desired parallel emergent rays (22, 25, 28) at points of the acousto-optical material which are spaced in the direction of the beam (5), said transducers generating ultrasonic waves at frequencies of an increasing value at the different points in the direction of the beam (5), and that in front of the acousto-optical material on the path of the beam (5) to be processed, the deflector further comprises a polariser (18) having a direction of polarisation of said beam (5) which is parallel to the direction of propagation of said ultrasonic waves within the acousto-optical material.

2. A deflector according to claim 1 characterised in that the ultrasound sources (6, 7, 8) comprise emitters (36, 37, 38) for emitting signals at radiofrequencies, which are respectively connected to modulators (12, 13, 14) with a control line (21, 24, 27), the outputs of said modulators (12, 13, 14) being respectively connected to the transducers (9, 10, 11).

3. A deflector according to claim 1 characterised in that it comprises three transducers (9, 10, 11) which respectively have frequencies of action which are suitable for successively diverting from the beam (5) a red ray, a green ray and a blue ray.

4. A deflector according to claim 1 characterised in that it comprises a plurality of successive parallel crystals (1, 2, 3) which are each respectively associated with a corresponding transducer (9, 10, 11), the number thereof being equal to the number of emergent rays (22, 25, 28) which are diverted from the beam (5) to be processed.

## Patentansprüche

1. Akusto-optische Ablenkeinheit zum Trennen mindestens zweier verschiedener und parallel zueinander austretender Strahlen von einem optischen Bündel, das aus mehreren Strahlen unterschiedlicher Wellenlänge zusammengesetzt ist, umfassend ein akusto-optisches Material und Mittel zum Erzeugen von Ultraschallwellen verschiedener Frequenzen, die an die Wellenlängen des optischen Bündels angepaßt sind, dadurch gekennzeichnet, daß das akusto-optische Material aus mindestens einem achsenfern geschnittenen Paratellurit-Kristall (C) besteht, daß die Mittel zum Erzeugen von Ultraschallwellen aus Ultraschallquellen (6, 7, 8) für unterschiedliche Frequenzen bestehen, umfassend Ultraschallwandler (9, 10, 11), die mit dem akusto-optischen Material verbunden sind und in ihrer Zahl gleich der Zahl der gewünschten parallelen austretenden Strahlen (22, 25, 28) an Stellen des akusto-optischen Material angeordnet sind, die in Richtung des Strahlenbündels (5) einen Abstand voneinander aufweisen, wobei die Ultraschallwandler (9, 10, 11) Frequenzen erzeugen, deren Wert an den verschiedenen Punkten in Richtung des Bündels (5) zunimmt, und daß die Ablenkeinheit ferner vor dem akusto-optischen Material in der Bahn des zu behandelnden Bündels (5) einen Polarisator (18) mit einer Polarisationsrichtung für das Bündel (5) aufweist, die parallel zur Ausbreitungsrichtung der Ultraschallwellen in dem akusto-optischen Material ist.

2. Ablenkeinheit nach Anspruch 1, dadurch gekennzeichnet, daß die Ultraschallquellen (6, 7, 8) Hochfrequenzsignalsender (36, 37, 38) umfassen, die jeweils mit einem mit einer Steuerleitung (21, 24, 27) versehenen Modulator (12, 13, 14) verbunden sind, wobei die Ausgänge dieser Modulatoren (12, 13, 14) jeweils mit einem der Ultraschallwandler (9, 10, 11) verbunden sind.

3. Ablenkeinheit nach Anspruch 1, dadurch gekennzeichnet, daß sie drei Ultraschallwandler (9, 10, 11) umfaßt, deren Arbeitsfrequenzen geeignet sind, von dem Bündel (5) nacheinander einen roten Strahl, einen grünen Strahl und einen blauen Strahl abzulenken.

4. Ablenkeinheit nach Anspruch 1, dadurch gekennzeichnet, daß er mehrere aufeinander folgende zueinander parallele Kristalle (1, 2, 3) umfaßt, die jeweils mit einem entsprechenden Ultraschallwandler (9, 10, 11) verbunden sind, und deren Zahl gleich der Zahl der von dem zu behandelnden Bündel (5) abgelenkten austretenden Strahle (22, 25, 28) ist.